# EUROPÄISCHE PATENTSCHRIFT

(11) **EP 3 370 986 B1**
(45) Veröffentlichungstag und Bekanntmachung des Hinweises auf die Patenterteilung: **08.05.2019**
(21) Anmeldenummer: 16791010.8
(22) Anmeldetag: 03.11.2016
(51) Int. Cl.: B60K 1/04, B60K 1/00, A62C 27/00, B60P 1/64, B60L 1/00, B60L 11/18, G05D 1/02

(54) **TRANSPORTFAHRZEUG FÜR CONTAINER MIT EINEM BATTERIEMODUL ZUR VERSORGUNG DES FAHRANTRIEBS**
TRANSPORT VEHICLE FOR CONTAINERS WITH A BATTERY MODULE FOR SUPPLY OF THE DRIVE PROPULSION
VÉHICULE DE TRANSPORT POUR DES CONTENEURS AVEC UN MODULE DE BATTERIE POUR L'ALIMENTATION DE L'ENTRAÎNEMENT DE ROULEMENT

(30) Priorität: 07.11.2015 DE 102015119193
(43) Veröffentlichungstag der Anmeldung: 12.09.2018
(73) Patentinhaber: Konecranes Global Corporation, 05830 Hyvinkää (FI)
(72) Erfinder: HEGEWALD, Mike, 40597 Düsseldorf (DE); MOUTSOKAPAS, Jannis, 40789 Monheim (DE); KÖHN, Peter, 40591 Düsseldorf (DE)
(74) Vertreter: Moser Götze & Partner Patentanwälte mbB
(86) Internationale Anmeldenummer: PCT/EP2016/076577
(87) Internationale Veröffentlichungsnummer: WO 2017/076980

(56) Entgegenhaltungen:
- EP-A1- 2 440 431
- DE-A1-102008 059 968
- DE-A1-102011 109 024
- DE-A1-102012 108 768
- DE-A1-102013 001 473

## Beschreibung

Die Erfindung betrifft ein Transportfahrzeug für Container, insbesondere flurgebundenes und fahrerloses Schwerlast-Transportfahrzeug für ISO-Container, mit einer Plattform zur Aufnahme mindestens eines zu transportierenden Containers, die von Führungselementen zum Führen eines Containers beim Absetzen auf der Plattform begrenzt ist, und mit einem Fahrantrieb und einem Batteriemodul zur Versorgung des Fahrantriebs mit elektrischer Energie, wobei das Batteriemodul einen Tragrahmen und eine Batterie aufweist.

Aus der europäischen Patentschrift EP 2 440 431 B1 ist bereits ein Transportfahrzeug für Container im Sinne der Präambel von Anspruch 1 bekannt. Das Transportfahrzeug ist als fahrerloses und flurgebundenes Schwerlast-Transportfahrzeug für ISO-Container ausgebildet und hat einen elektrischen Fahrantrieb, der über eine von dem Transportfahrzeug mitgeführte Batterie mit elektrischer Energie versorgt wird. Die Batterie ist lösbar mit dem Transportfahrzeug verbunden, um die Batterie für ein Aufladen außerhalb des Transportfahrzeuges aus dem Transportfahrzeug quer zur Längsrichtung des Transportfahrzeuges hinaus und nach erfolgtem Laden der Batterie in das Transportfahrzeug hinein zu bewegen. Die Batterie ist als im Wesentlichen quaderförmige Bleibatterie ausgebildet und weist ein Gewicht zwischen 6 t und 10 t auf. Das Transportfahrzeug hat mindestens ein zulässiges Gesamtgewicht von 40 t und ist als Vierradfahrzeug mit zwei vorderen Rädern und zwei hinteren Rädern ausgebildet. Die vorderen Räder sind von einem ersten Elektromotor und die hinteren Räder von einem zweiten Elektromotor antreibbar. Zwischen den vorderen Rädern und hinteren Rädern ist ein nach unten und zu den Seiten des Transportfahrzeuges offener Einbauraum für die Batterie vorgesehen. In dem Einbauraum sind Tragschienen quer zur Längsrichtung des Transportfahrzeuges verlaufend angeordnet, an denen die Batterie über seitlich auskragende Auflageelemente abgestützt ist. Im Bereich der Auflageelemente und der Tragschienen sind Zentrierungselemente angeordnet, die bei einem Hereinbewegen der Batterie in den Einbauraum und einem Absenken der Batterie auf die Tragschienen die Auflageelemente zu den Tragschienen ausrichten. Auch sind an der Batterie elektrische Kontaktelemente angeordnet und im Bereich der Tragschienen elektrische Gegen-Kontaktelemente angeordnet, die automatisch über ein Absenken der Batterie auf die Tragschienen verbindbar sind.

Aus der deutschen Offenlegungsschrift DE 10 2012 108 768 A1 ist ein Transportfahrzeug für Container in Form eines batterie-elektrischen Sattelzugs bekannt. Der Sattelzug hat dementsprechend einen elektrischen Fahrantrieb, der von einer mitgeführten Batterie gespeist wird. Die beispielsweise als Lithium-Ionen-Batterie ausgebildete Batterie ist für ein Aufladen lösbar an dem Sattelzug befestigt, um außerhalb des Sattelzugs geladen werden zu können. Des Weiteren weist der Sattelzug ein Batteriemanagementsystem auf, über das beispielsweise Ladezeiten optimiert werden können oder die Batterie klimatisiert werden kann.

Die deutsche Offenlegungsschrift DE 10 2011 109 024 A1 offenbart ein elektrisches Antriebsmodul für ein Nutzfahrzeug mit einem elektrischen Antrieb. Das Antriebsmodul umfasst Lithium-Ionen-Zellen und ein Kühlsystem.

Aus der deutschen Offenlegungsschrift DE 10 2008 059 968 A1 ist ein Kraftfahrzeug bekannt, das eine Lithium-Ionen-Batterie aufweist. Der Innenraum der Batterie ist mit dem Kältemittelkreislauf der Klimaanlage des Kraftfahrzeugs verbunden. Hierbei ist eine Leitung durch den Innenraum geführt, die innerhalb des Innenraums geöffnet werden kann, um Kältemittel in den Innenraum abzugeben. Eine ähnliche Einbindung der Klimaanlage eines Fahrzeugs in ein Batteriekühlsystem ist auch aus der DE 10 2014 204 263 A1 bekannt.

Ausgehend von diesem Stand der Technik liegt der vorliegenden Erfindung die Aufgabe zugrunde, ein verbessertes gattungsgemäßes Transportfahrzeug für Container zu schaffen.

Diese Aufgabe wird durch ein Transportfahrzeug mit den Merkmalen des Anspruchs 1 gelöst. Vorteilhafte Ausgestaltungen der Erfindung sind in den abhängigen Ansprüchen 2 bis 8 angegeben.

Erfindungsgemäß wird ein verbessertes Transportfahrzeug für Container, insbesondere flurgebundenes und fahrerloses Schwerlast-Transportfahrzeug für ISO-Container, mit einer Plattform zur Aufnahme mindestens eines zu transportierenden Containers, die von Führungselementen zum Führen eines Containers beim Absetzen auf der Plattform begrenzt ist, und mit einem Fahrantrieb und einem Batteriemodul zur Versorgung des Fahrantriebs mit elektrischer Energie, wobei das Batteriemodul einen Tragrahmen und eine Batterie aufweist, dadurch geschaffen, dass die Batterie als Lithium-Ionen-Batterie ausgebildet ist und in dem Tragrahmen neben der Batterie zumindest ein Klimagerät sowie ein Managementsystem für die Batterie angeordnet sind. Vorzugsweise ist vorgesehen, dass zusätzlich eine Feuerlöschanlage in dem Tragrahmen angeordnet ist.

Im Sinne der Erfindung wird bevorzugt unter einem Transportfahrzeug ein Fahrzeug verstanden, das eine Zuladung von mindestens 40 t transportieren kann. Als Lasten für die Schwerlast-Transportfahrzeuge kommen ISO-Container und Wechselbehälter in Frage. Beladene Wechselbehälter können in der Regel bis zu etwa 16 t wiegen. ISO-Container wiegen im beladenen Zustand 20 t bis 80 t. Der Transport von ISO-Containern wird bevorzugt. Unter ISO-Containern werden allgemein genormte Großbehälter mit genormten Aufnahmepunkten oder- ecken für Lastaufnahmemittel verstanden. Auch ein Transportfahrzeug, das leer fährt oder einen leeren ISO-Container oder Wechselbehälter transportiert, soll unter diese Verständnis fallen, soweit dieses Fahrzeug eine Zuladung von mindestens 15 t, vorzugsweise mindestens 20 t, transportieren kann. Es kann auch vorkommen, dass derartige Transportfahrzeuge in einem Mischbetrieb arbeiten, d.h. neben den ISO-Container oder Wechselbehältern auch andere Lasten wie Sattelauflieger, Wechselbrücken, Anhänger, Lastkraftwagen oder Zugmaschinen transportieren.

Auch ist im Sinne der Erfindung bevorzugt, dass das Transportfahrzeug nicht schienengebunden und somit frei verfahrbar ist.

Ein Grundgedanke der vorliegenden Erfindung ist, für den Fahrantrieb eines gattungsgemäßen Transportfahrzeugs für Container ein Batteriemodul zu schaffen, dass eine kompakte Bauweise aufweist, welche unabhängig von der verwendeten Bauform und Baugröße der Batterie als Baueinheit in ein derart spezielles Transportfahrzeug eingesetzt werden kann. Durch die Zusammenfassung aller mit der Batterie verbundenen Zusatzfunktionen, insbesondere Kühlung und gegebenenfalls Brandschutz, innerhalb Batteriemoduls ist eine schnelle Austauschbarkeit des Batteriemoduls gewährleistet, da lediglich eine Schnittstelle vom Batteriemodul zum Transportahrzeug vorhanden ist, die ab- beziehungsweise angekoppelt werden muss.

Wäre hingegen nur die Batterie wechselbar und alle Zusatzfunktionen wären fest im Transportfahrzeug installiert, ergäben sich mehrere Schnittstellen, von der jede einzelne beim Wechsel der Batterie vom Transportfahrzeug abgekoppelt werden müsste. Durch die Auswechselbarkeit des Batteriemoduls an sich wird der Stillstand des Transportfahrzeugs für Wartungszwecke und/oder Ladezwecke auf ein Minimum reduziert. Dadurch wird die Dauer des Fahrbetriebs und so auch die Umschlagsmenge des Transportfahrzeugs steigen. Für Wartungsarbeiten und/oder den Ladevorgang ist ein auswechselbares Batteriemodul wesentlich einfacher, da eine einfachere Zugänglichkeit außerhalb des Transportfahrzeuges gewährleistet wird. Die Wartung kann dann an einem gesicherten Arbeitsplatz stattfinden, insbesondere wenn Wartungsarbeiten an einer Feuerlöschanlage des Batteriemoduls durchgeführt werden müssen. Der erfindungsgemäße Tragrahmen bietet eine geschlossene Einhausung der Batterie mit dem Klimagerät, des Managementsystems und gegebenenfalls der Feuerlöschanlage.

Im Zusammenhang mit der vorliegenden Erfindung ist das Klimagerät als Heizungs- und/oder Lüftungs- und/oder Kühlungsgerät zu verstehen. Ob ein Klimagerät ausgewählt wird, dass alle drei Funktionen oder nur eine oder zwei der vorgenannten Funktionen zur Verfügung stellt, wird im Zusammenhang mit dem Einsatzgebiet des Batteriemoduls beziehungsweise des Transportfahrzeuges gewählt werden. In vielen Einsatzgebiete kann ein Lüftungsgerät ausreichen, um eine Batterie bevorzugt auf Temperaturen im Bereich von 20 bis 25 °C zu halten beziehungsweise zu bringen. Das Klimagerät kann die Batterie über Luft oder Flüssigkeiten heizen oder kühlen. Kühlgeräte mit Kühlflüssigkeiten haben in vorteilhafter Weise kleinere Baumaße.

In vorteilhafter Weise ist die Feuerlöschanlage eine CO2-Feuerlöschanlage.

Die Batterie ist als Lithium-Ionen-Batterie ausgebildet, da die Zeiten für die Ladezyklen relativ kurz sind und etwa im Bereich von 20 Minuten liegen. Daher verbleibt eine Lithium-Ionen-Batterie vorzugsweise für den Ladevorgang im Transportfahrzeug selbst. Ein Auswechseln der Batterien, wie es bei Blei-Batterien stattfindet, ist auf Grund der wesentlich kürzeren Ladezeiten der Lithium-Ionen-Batterien nicht erforderlich. Die kürzeren Ladezeiten der Lithium-Ionen-Batterien beinträchtigen nicht die Dauer des Fahrbetriebs und so auch nicht die Umschlagsmenge des Transportfahrzeugs. Lithium-Ionen-Batterien sind bei gleicher Kapazität, verglichen mit Blei-Batterien, wesentlich leichter und nehmen üblicherweise auch weniger Volumen ein. Lithium-Ionen-Batterien benötigen keine weiteren Medien wie z.B. Wasser oder Luft, die Blei-Batterien benötigen. Ebenso benötigen Lithium-Ionen-Batterien keine Ruhezeiten nach dem Laden wie vergleichbare Blei-Batterien und beim Laden von Lithium-Ionen-Batterien entstehen keine Gase (Wasserstoffverbindungen beispielsweise Knallgas). Ein Wechsel von Lithium-Ionen-Batterien ist daher vorzugsweise nur zu Wartungszwecken und nicht zu Ladezwecken vorgesehen.

Eine Wechselbarkeit des Batteriemoduls sowie dessen Aufhängung in dem Transportfahrzeug wird dadurch vereinfacht, dass der Tragrahmen selbsttragend ist.

Vorzugsweise ist vorgesehen, dass die Batterie das Klimagerät, das Managementsystem und gegebenenfalls die Feuerlöschanlage mit elektrischer Energie versorgt. Die zugehörigen Funktionen sind somit sowohl im Transportfahrzeug eingehängten Betriebszustand des Batteriemoduls als auch während des Wechsel- und/oder Ladevorganges verfügbar. In dieser Hinsicht ist das Batteriemodul autark, solange der Ladezustand der Batterie dies erlaubt. Somit ist auch ein Transport im Sinne einer Versendung beziehungsweise Lieferung von als Lithium-Ionen-Batterien ausgebildeten Batterien leichter möglich.

In vorteilhafter Weise ist vorgesehen, dass das Batteriemodul für einen Wechsel für ein Aufladen der Batterie und/oder eine Wartung der Batterie, insbesondere der Feuerlöschanlage, außerhalb des Transportfahrzeuges lösbar mit dem Transportfahrzeug verbunden ist. Somit kann die Wartung und/oder der Ladevorgang außerhalb des Transportfahrzeuges in einem entsprechend gesicherten Bereich erfolgen.

Hierbei ist bevorzugt, dass das Batteriemodul quer zur Längsrichtung des Transportfahrzeuges hinein und aus diesem heraus bewegbar ist. Auch ist vorteilhafter Weise vorgesehen, dass das Batteriemodul in einem nach unten und zu mindestens einer Seite offenen Einbauraum des Transportfahrzeugs im Betrieb aufgehängt ist.

Des Weiteren ist im Sinne der Erfindung ein Batterie- beziehungsweise Batteriemodulwechsel als im Zusammenhang mit einer Wartung und /oder einem Aufladen der Batterie zu verstehen, um die Verfügbarkeit des Transportfahrzeuges zu erhöhen und nicht durch die lange Wartung und/oder den Ladevorgang einer fest im Transportfahrzeug installierten Batterie zu minimieren. Dem Grunde nach kann auch eine fest installierten Batterie ein- und ausgebaut werden. Dies ist aber kein Wechsel im Sinne der Erfindung. Somit wäre ein Einbau einer sonst im Transportfahrzeug fest installierten Batterie oder einer Austausch einer defekten fest installierten Batterie nicht als Wechsel zu verstehen.

Nachfolgend wird die Erfindung anhand eines in einer Zeichnung dargestellten Ausführungsbeispiels näher erläutert. Es zeigen:
Figur 1 eine perspektivische Ansicht schräg von oben auf ein flurgebundenes und fahrerloses Transportfahrzeug für ISO-Container,
Figur 2 eine perspektivische Ansicht gemäß Figur 1 ohne den Fahrzeugrahmen des Transportfahrzeugs,
Figur 3 eine Seitenansicht des Transportfahrzeugs von Figur 1,
Figur 4 eine Detailansicht auf ein erfindungsgemäßes Batteriemodul,
Figur 5 eine Draufsicht von Figur 4 und
Figuren 6 und 7 Ausschnittsvergrößerungen aus dem Bereich einer Aufhängung des Batteriemoduls.

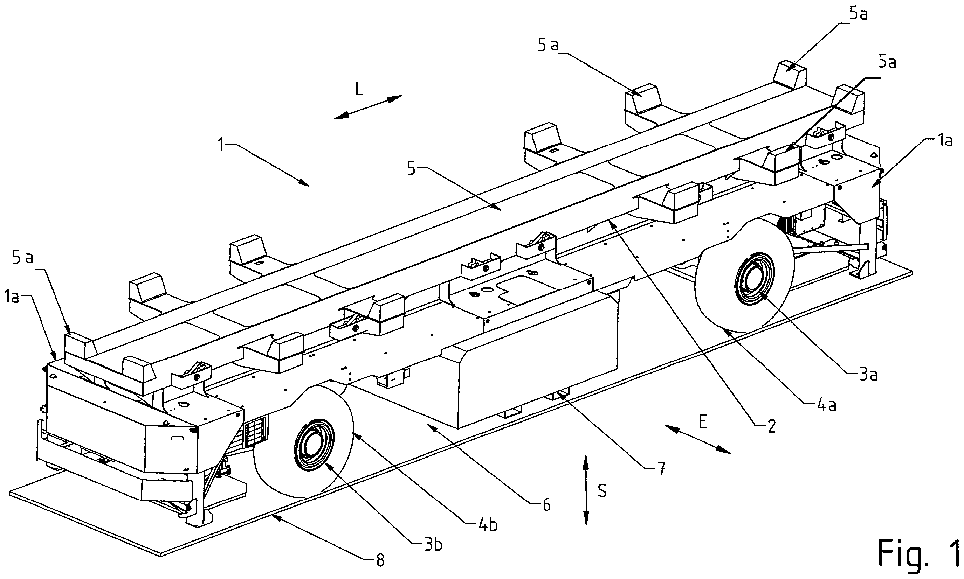

Die Figur 1 zeigt eine perspektivische Ansicht schräg von oben auf ein flurgebundenes und fahrerloses Transportfahrzeug 1 für ISO-Container. Das Transportfahrzeug 1 ist als Schwerlast-Transportfahrzeug ausgebildet und hat ein Leergewicht von etwa 35 Tonnen. Hierzu kommt noch das Gewicht des oder der zu transportierenden ISO-Container, so dass im Beladungszustand ein Gesamtgewicht von etwa 85 Tonnen erreicht wird. Das Transportfahrzeug 1 hat mindestens ein zulässiges Gesamtgewicht von 40 t und ist als Vierradfahrzeug ausgebildet. Auch besteht das Transportfahrzeug 1 im Wesentlichen aus einem Fahrzeugrahmen 2, an dem auf einer gemeinsamen Vorderachse 3a zwei vordere Räder 4a und auf einer gemeinsamen Hinterachse 3b zwei hintere Räder 4b gelagert sind. Die vier Räder 4a, 4b sind mit einer Bereifung, vorzugsweise Gummi-Bereifung, versehen, so dass das Transportfahrzeug 1 nicht auf Schienen gebunden, sondern frei auf einem Boden 8 verfahrbar ist. Von dem Fahrzeugrahmen 2 wird eine vorzugsweise ebene Plattform 5 getragen, die zur Aufnahme der zu transportierenden und nicht dargestellten ISO-Container dient. Die Größe der Plattform 5 ist so gewählt, dass in einer Längsrichtung L des Transportfahrzeugs 1 gesehen zwei 20-Fuß-Container hintereinander oder ein 40-Fuß-Container beziehungsweise 45-Fuß-Container transportierbar sind. Die Plattform 5 kann passiv im Sinne von starr mit dem Fahrzeugrahmen 2 verbunden ausgebildet sein oder aktiv sein. In diesem Zusammenhang wird unter aktiv verstanden, das die Plattform 5 in einer vertikalen Richtung und relativ zu dem Fahrzeugrahmen 2 heb- und senkbar ist, um aktiv Container aufzunehmen oder abzustellen.

Um einen zu transportieren Container beim Absetzen auf der Plattform 5 führen und in Bezug auf die Plattform 5 ausrichten zu können, wird die Plattform 5 an ihren Seiten von mehreren Führungselementen 5a begrenzt. Die Führungselemente 5a weisen hierfür Führungsflächen mit einem schrägen Verlauf auf. Hierbei erstrecken sich die Führungsflächen von der Plattform 5 weggerichtet nach außen und zu der Plattform 5 hin nach innen. Vorzugsweise sind die Führungselemente 5a paarweise an gegenüberliegenden Seiten, insbesondere Längsseiten und/oder Schmalseiten, der Plattform 5 angeordnet. Die Führungsflächen eines Paars von Führungselementen 5a bilden eine Art Trichter, deren schräger Verlauf sich zur Plattform 5 hin verjüngt, um die Führungs- und Ausrichtfunktion zu realisieren. Dementsprechend erweitern sich die Führungsflächen eines Paars von Führungselementen 5a von der Plattform 5 nach oben weggerichtet.

Es ist ersichtlich, dass der Fahrzeugrahmen 2 einen Einbauraum 6 für ein Batteriemodul 7 aufweist. Das Batteriemodul 7 besteht als integrales Bauteil im Wesentlichen aus einer oder mehreren Batterien 7a, einem quaderförmigen, selbsttragenden und geschlossenen Tragrahmen 7b, einem Managementsystem 7c, einem Klimagerät 7d und einer Feuerlöschanlage 7e. Nachfolgend wird vereinfachend nur von einer Batterie 7a gesprochen. Der Einbauraum 6 für das Batteriemodul 7 beginnt unterhalb der Plattform 5 des Fahrzeugrahmens 2 und ist nach unten in Richtung des Bodens 8 und zu den Seiten 1a des Transportfahrzeuges 1 offen. Wie in Figur 1 ersichtlich, sind die Seiten 1a Längsseiten des Transportfahrzeugs 1. Außerdem ist der Einbauraum 6 zwischen den vorderen und den hinteren Rädern 4a, 4b des Transportfahrzeuges 1 angeordnet. Da der Einbauraum 6 in Längsrichtung L des Transportfahrzeuges 1 gesehen zu der rechten und linke Seite 1a hin offen ist, kann ein Wechsel des Batteriemoduls 7, um eine Batterie 7a des Batteriemoduls 7 außerhalb des Transportfahrzeuges 1 aufzuladen und/oder zu warten, einfach durch eine Bewegung quer zur Längsrichtung L des Transportfahrzeuges 1 in einer Be- und Entladerichtung E erfolgen. Außerdem ist der Einbauraum 6 nach unten offen, so dass das Batteriemodul 7 von gabelstaplerartigen Fördergeräten be- und entladen werden kann. Die Batterie 7a ist als Lithium-Ionen-Batterie ausgebildet. Das Batteriemodul 7 hat etwa ein Gewicht von 4 bis 6 Tonnen. Bei einer Lithium-Ionen-Batterie ist ein Wechsel nur zu Wartungszwecken vorgesehen.

Lithium-Ionen-Batterien heizen sich beim Aufladen extrem auf. Es können Temperaturen bis 80°C und höher erreicht werden. Auch beim Abgeben von elektrischer Energie, insbesondere bei hohen Kapazitäten in kurzer Zeit, können Temperaturanstiege entstehen. Daher ist es notwendig, Lithium-Ionen-Batterien zu kühlen beziehungsweise in einer konstanten Umgebungstemperatur zu betreiben, die üblicherweise im Bereich von 20°C bis 25°C liegt. Je nach den klimatischen Bedingungen eines Einsatzgebiets kann eine Luftkühlung ausreichen. Ist jedoch die Umgebungstemperatur größer als 25 °C, was durchaus in sehr vielen Regionen der Erde vorkommt, dann muss die Kühlluft mit einem Klimagerät gekühlt werden. Auch Einsatzfälle mit einer Beheizung der die Batterie umströmenden Luft sind denkbar. Weiterhin ist eine Brandgefahr bei Lithium-Ionen-Batterien, insbesondere bei hohen inneren Temperaturen, nicht auszuschließen. Im Falle eines Brandes brennt Lithium besonders gut selbstständig. Ein Lithium-Brand sollte mit einer Feuerlöschanlage basierend auf CO2 gelöscht werden.

Um den Zustand wie beispielsweise Ladezustand, Temperatur und Strom der Lithium-Ionen-Batterien, insbesondere der inneren Zellen in der Lithium-Ionen-Batterie, permanent zu überprüfen und dann bei Unregelmäßigkeiten entsprechend eingreifen zu können, wird ein Managementsystem 7c für die Batterie 7a installiert. Dieses ist auch in der Lage die Zellen der der Lithium-Ionen-Batterien elektrisch so zu schalten, dass die Spannungen der Zellen etwas ausgeglichen werden. Das Managementsystem 7c ist dann steuerungstechnisch mit dem Klimagerät 7d und der Feuerlöschanlage 7e verbunden, um bei Bedarf die Batterie 7a zu kühlen oder zu beheizen beziehungsweise im Notfall die Feuerlöschanlage 7e auszulösen.

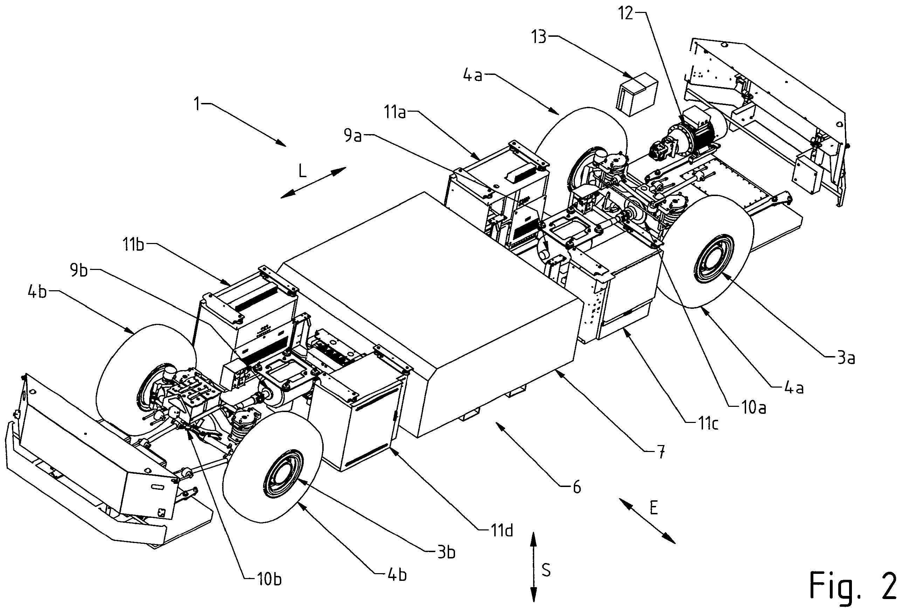

In der Figur 2 ist eine weitere perspektivische Ansicht des Transportfahrzeugs 1 wiederum schräg von oben jedoch nun unter Weglassung des Fahrzeugrahmens 2 dargestellt, um weitere Komponenten des Transportfahrzeugs 1 sichtbar zu machen. Neben den bereits zu der Figur 1 beschriebenen Elementen ist in der Figur 2 zusätzlich ein elektrischer Fahrantrieb des Transportfahrzeuges 1 zu erkennen, der im Wesentlichen aus einem vorderen Elektromotor 9a, einem vorderen Verteilgetriebe 10a, einem hinteren Elektromotor 9b und einem hinteren Verteilgetriebe 10b besteht. Der vordere Elektromotor 9a ist in Längsrichtung L des Transportfahrzeuges 1 gesehen zentral und im Bereich der Vorderachse 3a unter dem Fahrzeugrahmen 2 befestigt. Der hintere Elektromotor 9b ist in Längsrichtung L des Transportfahrzeuges 1 gesehen zentral und im Bereich der Hinterachse 3b unter dem Fahrzeugrahmen 2 befestigt. Der vordere Elektromotor 9a treibt über das vordere Verteilgetriebe 10a die beiden vorderen Räder 4a an und der hintere Elektromotor 9b über das hintere Verteilgetriebe 10b die beiden hinteren Räder 4b. Das Transportfahrzeug 1 hat somit einen Allradantrieb.

Außerdem ist ersichtlich, dass zwischen dem Batteriemodul 7 und der Vorderachse 3a Raum für die Aufhängung von Schaltschränken 11a bis 11d unter und seitlich an dem Fahrzeugrahmen 2 vorhanden ist, um Steuerungskomponenten aufzunehmen. Der Schaltschrank 11a ist ein Hydraulik-Schaltschrank; der Schaltschrank 11b ist ein Antriebstechnik-Schaltschrank und die verbleibenden Schaltschränke 11c und 11d sind für sonstige Steuerungsaufgaben wie beispielsweise Navigation oder Leistungsbauteile wie ein Wechselrichter, um den Gleichstrom der Batterie 7a in einen Wechselstrom für die Elektromotoren 9a und 9b sowie eine Hydraulikeinheit 12 umzuwandeln, vorgesehen. Im Bereich vor den vorderen Rädern 3a ist Raum für die ebenfalls elektrische angetriebene Hydraulikeinheit 12 vorgesehen, über die hydraulische Komponenten wie beispielsweise Hubantriebe für die Container versorgt werden können. Ebenfalls in diesem Bereich des Transportfahrzeuges 1 ist an der Seite 1a des Transportfahrzeuges 1 ein elektrisches Steckelement 13 angeordnet. Hierüber kann die Batterie 7a geladen werden und dabei im Transportfahrzeug 1 verbleiben.

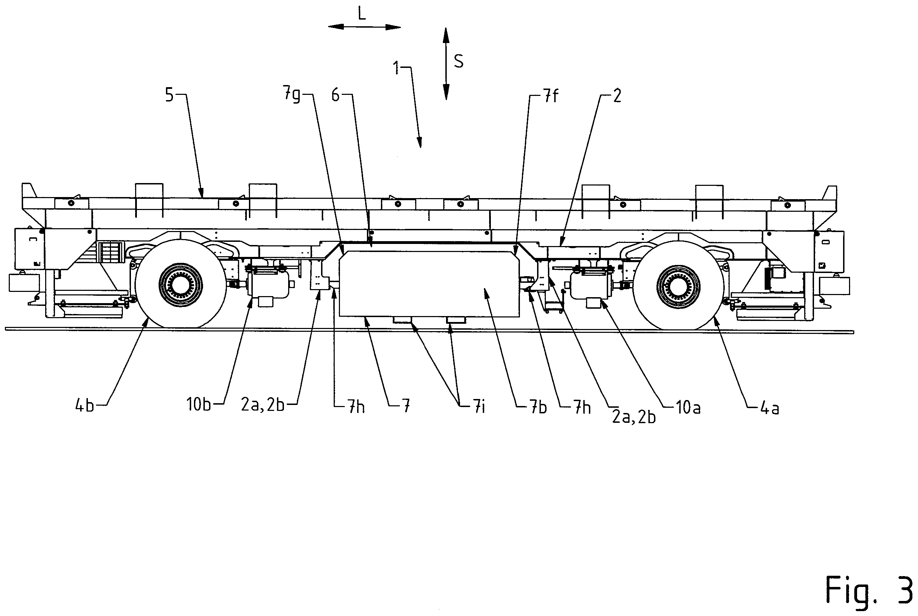

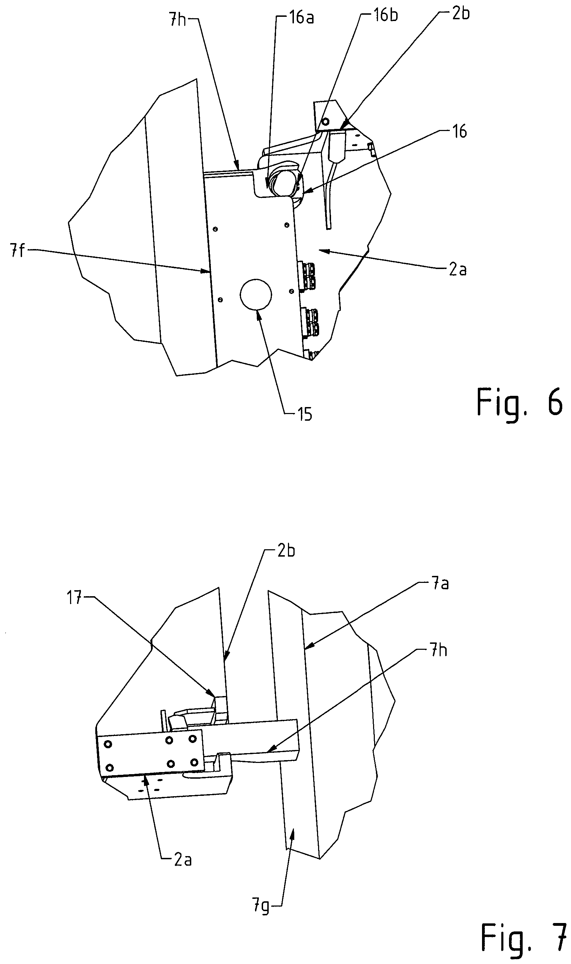

Die Figur 3 zeigt eine Seitenansicht des Transportfahrzeuges 1. Hieraus ist besonders gut ersichtlich, dass das Batteriemodul 7 über Tragschienen 2a an dem Fahrzeugrahmen 2 des Transportfahrzeuges 2 aufgehängt ist. Die beiden Tragschienen 2a sind mit Abstand zueinander angeordnet, horizontal zueinander ausgerichtet und auf einer Höhe an dem Fahrzeugrahmen 2 über Konsolen 2b befestigt beziehungsweise aufgehängt. Die Tragschienen 2a begrenzen den Einbauraum 6 in Längsrichtung L des Fahrzeugs gesehen nach vorne und nach hinten. Um das Batteriemodul 7 beziehungsweise den Tragrahmen 7b des Batteriemoduls 7 an den Tragschienen 2a aufhängen zu können, sind an dem quaderförmigen Tragrahmen 7b und insbesondere an seinen vorderen und hinteren Seitenwänden 7f, 7g sowie im Bereich von zentralen Trägern des Fahrzeugrahmens 2 seitlich in Längsrichtung des Transportfahrzeugs 1 gesehen nach vorne beziehungsweise hinten auskragende Aufhängeelemente 7h angeordnet. Die Aufhängeelemente 7h liegen im Betriebszustand des Batteriemoduls 7 auf den Tragschienen 2a des Transportfahrzeuges 1 auf und tragen somit das gesamte Gewicht des Batteriemoduls 7 und nehmen etwaig auftretende Kräfte während des Betriebs des Transportfahrzeugs 1 auf. Die Aufhängeelemente 7h sind etwa jeweils um ein Drittel der Breite des Batteriemoduls 7 von der Seite nach innen versetzt angeordnet. Durch diese Art der Aufhängung des Batteriemoduls 7 innerhalb des Fahrzeugrahmens 2 kann das Batteriemodul 7 einfach von einem Gabelstapler oder einem anderem Hubgerät beziehungsweise Fördergerät unterfahren werden. Hierzu sind an der Bodenseite des Batteriemoduls 7 zwei in Be- und Entladerichtung E verlaufende Taschen 7i angeordnet, von denen die Gabel des Gabelstaplers oder des anderen Hubgeräts sicher aufgenommen werden kann. Die Taschen 7i sind beispielsweise über an der Bodenseite des Batteriemoduls 7 angeordnete U-Träger gebildet. Dann werden durch eine Bewegung des Gabelstaplers oder des anderen Hubgeräts in einer vertikalen Hub- und Senkrichtung S die Aufhängeelemente 7h von der Tragschiene 2a abgehoben und anschließend kann das Batteriemodul 7 in Ein- und Auslagerungsrichtung E aus dem Transportfahrzeug 1 heraus bewegt werden. Zusätzlich ist vorgesehen, dass durch die vertikale Bewegung in Hub- und Senkrichtung S das Batteriemodul 7 mit der Batterie 7a über Zentrierelemente 16 (siehe Figur 6) auf den Tragschienen 2a ausgerichtet, gegen Verrutschen gesichert und von den Zentrierelementen 16 gelöst werden kann. Zusätzlich können durch die Bewegung in Hub- oder Senkrichtung S auch vorgesehene elektrische Kontakteinheiten 15 mit Steckern und Buchsen an dem Batteriemodul 7a beziehungsweise der Batterie 7a im Bereich der Tragschienen 2a für eine elektrische Verbindung des Batteriemoduls 7 beziehungsweise der Batterie 7 mit dem Transportfahrzeug 1, insbesondere dessen Fahrantrieb, gelöst beziehungsweise verbunden werden. Der Vorteil hiervon ist, dass das Transportfahrzeug 1 bezüglich der Zentrierung und Kontaktierung des Batteriemoduls 7 und seiner Batterie 7a passiv ausgebildet werden kann.

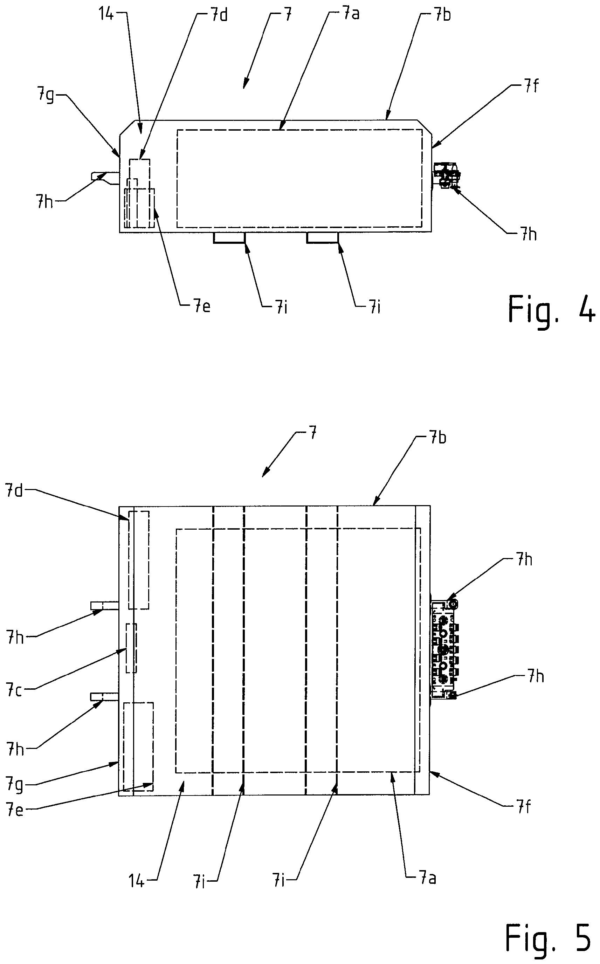

In der Figur 4 eine Detailansicht auf ein erfindungsgemäßes Batteriemodul 7 gezeigt. Das Batteriemodul 7 ist eine Baugruppe, die eine Batterie 7a, einen quaderförmigen, selbsttragenden und geschlossenen Tragrahmen 7b, ein Managementsystem 7c, ein Klimagerät 7d und eine Feuerlöschanlage 7e umfasst. Der selbsttragende Tragrahmen 7b ist als Behälter beziehungsweise als Trog mit einem Deckel ausgebildet und verbindet die Batterie 7a, das Managementsystem 7c, das Klimagerät 7d und die Feuerlöschanlage 7e zu einem Batteriemodul 7, das an den Einbauraum 6 des entsprechenden Transportfahrzeuges 1 angepasst ist. Die Batterie 7a nimmt den überwiegenden Teil des Volumens des Tragrahmens 7b ein. Hierbei ist die Batterie 7a ebenfalls quaderförmig aber kleiner als der Tragrahmen 7b ausgebildet, so dass an einer Seite der Batterie 7b ein Aufnahmeraum 14 für das Managementsystem 7c, das Klimagerät 7d und die Feuerlöschanlage 7e verbleibt. In Bezug auf eine als Lithium-Ionen-Batterie ausgebildete Batterie 7a ist die Feuerlöschanlage 7e als CO2-Feuerlöschanlage ausgebildet. Das Klimagerät 7d dient zur aktiven Temperaturregelung, insbesondere Kühlung, der Batterie 7b. Beim Aufladen der Batterie 7b, insbesondere in kurzer Zeit, entsteht Wärme, welche aktiv über das Klimagerät 7d abgeführt wird. Außerdem arbeitet die Batterie 7b optimal bei einer konstanten Umgebungstemperatur. Insgesamt ist der Tragrahmen 7b als Trog mit einem Deckel ausgebildet und somit im Betrieb mit Ausnahme der Öffnungen für die Klimatisierung - soweit bei Luftkühlung erforderlich - geschlossen. Die Batterie 7a versorgt das Managementsystem 7c, das Klimagerät 7d und die Feuerlöschanlage 7e mit elektrischer Energie auch außerhalb des Transportfahrzeuges 1.

Die Figur 5 zeigt eine Draufsicht von Figur 4, aus der ersichtlich ist, dass der Aufnahmeraum 14 quaderförmig ist und in Längsrichtung L des Transportfahrzeugs 1 vorne von der Batterie 7a und hinten von der hinteren Seitenwand 7g des Tragrahmens 7b begrenzt wird.

In den Figuren 6 und 7 sind jeweils Ausschnittsvergrößerungen aus dem Bereich einer Aufhängung des Batteriemoduls 7 an dem Fahrzeugrahmen 2 dargestellt.

Die Figur 6 zeigt die Auflageelemente 7h an der vorderen Seitenwand 7f des Tragrahmens 7b. An einem freien Ende sind die Auflageelemente 7h und die Tragschienen 2a als Zentrierelemente 16 ausgebildet, um das Batteriemodul 7 beim Aufhängen in den Fahrzeugrahmen 2 gegenüber der Tragscheine 2a auszurichten. Hierfür besteht jedes Zentrierelement 16 aus einer ringförmigen Gabel 16a an dem Auflageelement 7h und einem konusförmigen Zapfen 16b auf der Tragschiene 2a. Je Auflageelement 7h ist ein Zentrierelement 16 vorgesehen. Zwischen den beiden Auflageelementen 7h ist an der vorderen Seitenwand 7f und an der Tragschiene 2a eine trennbare elektrische Kontakteinheit 15 angeordnet, die sich flach und horizontal erstreckt. Diese in Figur 6 schematisch dargestellte Kontakteinheit 15 besteht aus einer Vielzahl von Steckern und Buchsen sowie weiteren Zentrierelementen, um automatisch über die Absenkbewegung in Hub- und Senkrichtung S des Batteriemodul 7 auf die Tragschiene 2a einen elektrischen Kontakt herzustellen. Die Kontakteinheit 15 stellt die Verbindung für Steuersignale und elektrische Energie her. Hierbei sind die Stecker am Tragrahmen 7b und die Buchsen an der Tragschiene 2a angeordnet. Die Kontakteinheit 15 kann entfallen, wenn die Batterie 7a fest im Fahrzeug eingebaut wird.

Die Figur 7 zeigt die Auflageelemente 7h an der hinteren Seitenwand 7g des Tragrahmens 7b. An einem freien Ende ist eines der beiden Auflageelemente 7h in einem nach oben offenen u-förmigen Halteelement 17 seitlich geführt.

Als Einsatzgebiete der vorbeschriebenen Transportfahrzeuge 1 und der zugehörigen Batteriewechselsysteme sind der Umschlag von ISO-Containern im Hafenbereich und im intermodalen Verkehr zwischen Straße und Schiene vorgesehen.

Die vorliegende Erfindung ist an Hand eines flurgebundenen Transportfahrzeuges 1 für den Transport von ISO-Containern beschrieben worden. Grundsätzlich ist es möglich, auch andere schweren Lasten wie beispielsweise Brammen oder Coils in der Hütten-, Stahl- und Walzwerkstechnik zu transportieren. Auch können die Transportfahrzeuge als sogenannte Terminal Trucks, Portalhubstapler, Straddle Carrier oder Reach Stacker ausgebildet sein. Unter Terminal Trucks sind Sattelzüge mit Zugmaschinen und Sattelauflieger zu verstehen. Ein Terminal Truck, insbesondere dessen auch als Trailer bezeichneter Sattelauflieger, weist daher ebenfalls eine von Führungselementen 5a begrenzte Plattform 5 im oben beschriebenen Sinne auf. Die Transportfahrzeuge 1 können auch mehr als zwei Achsen aufweisen, von denen nur eine oder alle elektrisch angetrieben sind. Ein elektrischer Einzelradantrieb ist auch denkbar. Neben dem Fahrantrieb können auch alle anderen Antriebe des Transportfahrzeugs 1 elektrisch oder elektro-hydraulisch sein.

Es ist selbstverständlich, dass mit dem Batteriemodul 7 auch andere elektrische Verbraucher neben dem Fahrantrieb mit elektrischer Energie versorgt werden können.

### Bezugszeichenliste

1 Transportfahrzeug
1a Seiten
2 Fahrzeugrahmen
2a Tragschiene
2b Konsole
3a Vorderachse
3b Hinterachse
4a vordere Räder
4b hintere Räder
5 Plattform
5a Führungselement
6 Einbauraum
7 Batteriemodul
7a Batterie
7b Tragrahmen
7c Managementsystem
7d Klimagerät
7e Feuerlöschanlage
7f vordere Seitenwand
7g hintere Seitenwand
7h Auflageelemente
7i Taschen
8 Boden
9a vorderer Elektromotor
9b hinterer Elektromotor
10a vorderes Verteilgetriebe
10b hinteres Verteilgetriebe
11a bis 11d Schaltschränke
12 Hydraulikeinheit
13 elektrisches Steckelement
14 Aufnahmeraum
15 elektrische Kontakteinheit
16 Zentrierelement
16a Gabel
16b Zapfen
17 Halteelement
E Be- und Entladerichtung
L Längsrichtung
S Hub- und Senkrichtung

## Patentansprüche

1. Transportfahrzeug (1) für Container, insbesondere flurgebundenes und fahrerloses Schwerlast-Transportfahrzeug (1) für ISO-Container, mit einer Plattform (5) zur Aufnahme mindestens eines zu transportierenden Containers, die von Führungselementen (5a) zum Führen eines Containers beim Absetzen auf der Plattform (5) begrenzt ist, und mit einem Fahrantrieb und einem Batteriemodul (7) zur Versorgung des Fahrantriebs mit elektrischer Energie, wobei das Batteriemodul (7) einen Tragrahmen (7b) und eine Batterie (7a) aufweist, **dadurch gekennzeichnet, dass** die Batterie (7a) als Lithium-Ionen-Batterie ausgebildet ist und in dem Tragrahmen (7b) neben der Batterie (7a) zumindest ein Klimagerät (7d) sowie ein Managementsystem (7c) für die Batterie (7a) angeordnet sind.

2. Transportfahrzeug (1) nach Anspruch 1, **dadurch gekennzeichnet, dass** in dem Tragrahmen (7b) zusätzlich eine Feuerlöschanlage (7e) angeordnet ist.

3. Transportfahrzeug (1) nach Anspruch 2, **dadurch gekennzeichnet, dass** die Feuerlöschanlage (7e) eine CO2-Feuerlöschanlage ist.

4. Transportfahrzeug (1) nach einem der Ansprüche 1 bis 3, **dadurch gekennzeichnet, dass** der Tragrahmen (7b) selbsttragend ist.

5. Transportfahrzeug (1) nach einem der Ansprüche 1 bis 4, **dadurch gekennzeichnet, dass** die Batterie (7a) das Klimagerät (7d), das Managementsystem (7c) und gegebenenfalls die Feuerlöschanlage (7e) mit elektrischer Energie versorgt.

6. Transportfahrzeug (1) nach einem der Ansprüche 1 bis 5, **dadurch gekennzeichnet, dass** das Batteriemodul (7) für einen Wechsel für eine Wartung und/oder ein Aufladen der Batterie (7) außerhalb des Transportfahrzeugs (1) lösbar mit dem Transportfahrzeug (1) verbunden ist.

7. Transportfahrzeug (1) nach einem der Ansprüche 1 bis 6, **dadurch gekennzeichnet, dass** das Batteriemodul (7) quer zur Längsrichtung (L) des Transportfahrzeugs (1) hinein und aus diesem heraus bewegbar ist.

8. Transportfahrzeug (1) nach einem der Ansprüche 1 bis 7, **dadurch gekennzeichnet, dass** das Batteriemodul (7) in einem nach unten und zu mindestens einer Seite (1a) offenen Einbauraum (6) des Transportfahrzeugs (1) im Betrieb aufgehängt ist.

## Claims

1. Transport vehicle (1) for containers, in particular a floor-bound and driverless heavy-duty transport vehicle (1) for ISO containers, having a platform (5) for receiving at least one container to be transported, which platform is delimited by guide elements (5a) for guiding a container as it is being set down on the platform (5), and having a drive unit and a battery module (7) for supplying electrical energy to the drive unit, wherein the battery module (7) comprises a support frame (7b) and a battery (7a) **characterised in that** the battery (7a) is designed as a lithium-ion battery and at least one air-conditioner device (7d) and a management system (7c) for the battery (7a) are disposed in the support frame (7b) in addition to the battery (7a).

2. Transport vehicle (1) as claimed in claim 1, **characterised in that** a fire-extinguishing system (7e) is additionally disposed in the support frame (7b).

3. Transport vehicle (1) as claimed in claim 2, **characterised in that** the fire-extinguishing system (7e) is a CO₂ fire-extinguishing system.

4. Transport vehicle (1) as claimed in any one of claims 1 to 3, **characterised in that** the support frame (7b) is self-supporting.

5. Transport vehicle (1) as claimed in any one of claims 1 to 4, **characterised in that** the battery (7a) supplies the air-conditioner device (7d), the management system (7c) and possibly the fire-extinguishing system (7e) with electrical energy.

6. Transport vehicle (1) as claimed in any one of claims 1 to 5, **characterised in that**, for the purpose of a change for maintaining and/or charging the battery (7) outside the transport vehicle (1), the battery module (7) is releasably connected to the transport vehicle (1).

7. Transport vehicle (1) as claimed in any one of claims 1 to 6, **characterised in that** the battery module (7) can be moved into and out of the transport vehicle (1) transversely to the longitudinal direction (L) of said vehicle.

8. Transport vehicle (1) as claimed in any one of claims 1 to 7, **characterised in that** the battery module (7) is suspended during operation in an installation space (6) of the transport vehicle (1), which is open in the downwards direction and on at least one side (1a).

## Revendications

1. Véhicule de transport (1) destiné à conteneurs, en particulier véhicule de transport (1) de charges lourdes sans conducteur lié au sol et destiné à des conteneurs ISO, comprenant une plate-forme (5) destinée à recevoir au moins un conteneur à transporter qui est délimité par des éléments de guidage (5a) destinés à guider un conteneur lors du placement sur la plate-forme (5), et un entraînement de roulement et un module de batterie (7) destiné à alimenter l'entraînement de roulement en énergie électrique, le module de batterie (7) comportant un cadre de support (7b) et une batterie (7a), **caractérisé en ce que** la batterie (7a) est conçue comme une batterie à ions lithium et au moins un climatiseur (7d) et un système de gestion (7c) destinés à la batterie (7a) sont disposés dans le cadre de support (7b) en plus de la batterie (7a).

2. Véhicule de transport (1) selon la revendication 1, **caractérisé en ce qu'**un système d'extinction d'incendie (7e) est en outre disposé dans le cadre de support (7b).

3. Véhicule de transport (1) selon la revendication 2, **caractérisé en ce que** le système d'extinction d'incendie (7e) est un système d'extinction d'incendie au CO₂.

4. Véhicule de transport (1) selon l'une des revendications 1 à 3, **caractérisé en ce que** le cadre de support (7b) est autoportant.

5. Véhicule de transport (1) selon l'une des revendications 1 à 4, **caractérisé en ce que** la batterie (7a), le climatiseur (7d), le système de gestion (7c) et éventuellement le système d'extinction d'incendie (7e) sont alimentés en énergie électrique.

6. Véhicule de transport (1) selon l'une des revendications 1 à 5, **caractérisé en ce que** le module de batterie (7) est relié de manière amovible au véhicule de transport (1) à l'extérieur du véhicule de transport (1) en vue de remplacer, d'entretenir et/ou de charger la batterie (7).

7. Véhicule de transport (1) selon l'une des revendications 1 à 6, **caractérisé en ce que** le module de batterie (7) peut être introduit dans le véhicule de transport (1), et sorti de celui-ci, transversalement à la direction longitudinale (L) de celui-ci.

8. Véhicule de transport (1) selon l'une des revendications 1 à 7, **caractérisé en ce que** le module de batterie (7) est suspendu pendant le fonctionnement dans un espace d'installation (6), ouvert vers le bas et sur au moins un côté (1a), du véhicule de transport (1).
